# EUROPÄISCHE PATENTANMELDUNG

(11) **EP 2 515 255 A1**
(43) Veröffentlichungstag der Anmeldung: **24.10.2012**
(21) Anmeldenummer: 11003248.9
(22) Anmeldetag: 18.04.2011
(51) Int. Cl.: G06K 7/10

(54) **Tragbares Lesegerät für Kennzeichnung eines Baustellenfahrzeugs**

(71) Anmelder: Joseph Vögele AG, 67067 Ludwigshafen (DE)
(72) Erfinder: Rutz, Arnold, 67065 Ludwigshafen (DE); Buschmann, Martin, Dipl.-Ing., 67435 Neustadt (DE); Eul, Achim, 68305 Mannheim (DE); Weiser, Ralf, 68526 Ladenburg (DE)
(74) Vertreter: Grünecker, Kinkeldey, Stockmair & Schwanhäusser

(57) **Zusammenfassung**

Die Erfindung bezieht sich auf ein tragbares Lesegerät (10) zum Erfassen einer identifizierenden Kennzeichnung (3) eines Baustellenfahrzeugs (1), wobei das Lesegerät (10) einen Lesekopf (13) zum Erfassen der Kennzeichnung (3), ein Standortbestimmungsmodul (14) und ein Kommunikationsmodul (18) aufweist. Die Erfindung bezieht sich auf eine Kennzeichnung (3) zur Anbringung an einen Baustellenfahrzeug (1), wobei diese Kennzeichnung (3) einen am Baustellenfahrzeug (1) anbringbaren Träger (4) und einen auf dem Träger (4) vorgesehenen Aufdruck (5) umfasst.

## Beschreibung

Die vorliegende Erfindung bezieht sich auf ein Lesegerät zum Erfassen einer identifizierenden Kennzeichnung eines Baustellenfahrzeugs. Bei dem Baustellenfahrzeug kann es sich beispielsweise um einen LKW, einen Schwerlasttransporter, einen Betonmischer, einen Bagger, einen Straßenfertiger, einen Beschicker, eine Walze oder um Servicefahrzeuge handeln.

In der Vergangenheit wurden bereits viele Vorschläge gemacht, wie Verfahren und Systeme zum Aufbringen von Straßenbelag im Hinblick auf einheitlichere Arbeitsergebnisse besser überwacht, gesteuert oder dokumentiert werden könnten. Beispielsweise offenbart die DE 101 51 942 B4 ein Arbeitsmaschinen-Managementsystem, bei dem Baufahrzeuge untereinander und mit einem Baustellenbüro kommunizieren können. Die ausgetauschten Daten können sich beispielsweise auf Diebstahlinformationen, Bauprojektkosten, Teilebedarfsvorhersagen, Servicebedarfsvorhersagen, Wetterdaten oder Kraftstoffverbrauch beziehen. Die DE 60 2004 011 968 T2 beschreibt ein weiteres System zum Informationsaustausch auf Baustellen. Ein Datenaustausch zwischen mobilen Baufahrzeugen und einem Baustellenbüro erfolgt dort mittels eines Internet-Protokolls. Die DE 10 2008 054 481 A1 beschreibt ein Asphaltierungssystem, bei dem die Navigation von Baufahrzeugen auf einem sogenannten Positionstemperaturmodell beruht. Aufgrund der zunächst abgeschätzten und dann gemessenen Asphalttemperatur bestimmt das System, wo Verdichtungsfahrzeuge am Günstigsten eingesetzt werden.

Gemäß der US 2004/0260504 A1 können asphaltbezogene Messdaten in einem drahtlosen Kommunikationssystem übertragen werden. Die DE 101 51 942 B4 beschreibt, dass jedem Baufahrzeug eine bestimmte Identifikation zugeteilt wird. Ein weiteres Flottenmanagementsystem für Baufahrzeuge geht aus der US 6,862,521 B1 hervor. Die WO 00/70150 A1 beschreibt eine Messung der Asphalttemperatur an einem Straßenfertiger. Die gemessenen Temperaturdaten werden an einen Verdichter weitergegeben, der dem Straßenfertiger folgt.

Die DE 197 44 772 A1 beschreibt die Bestimmung eines lokalen Verdichtungsniveaus, um einem Verdichter mitzuteilen, wie oft er über das angegebenen Gebiet fahren muss. Die DE 694 16 006 T2 beschreibt eine weitere Variante zur Steuerung eines Verdichters, beispielsweise einer Walze. Die Navigation einer Verdichtungswalze in Abhängigkeit vom Verdichtungsgrad beim Straßenbau wird auch in der EP 1 897 997 A2 behandelt.

Die DE 10 2008 058 481 A1, die DE 60 2004 011 968 T2 und die DE 101 51 942 B4 offenbaren das Einbeziehen von Klima- und Wetterdaten bei Baustellenprozessen. Ein automatisches Verkehrsleitsystem, das allerdings keinerlei Bezug zu Baustellenprozessen hat, geht aus der DE 195 47 574 hervor. Eine automatische Navigation von Baustellenfahrzeugen unter Berücksichtigung ihrer Position geht beispielsweise aus der DE 197 44 772, der DE 60 2004 011 968 T2, der DE 199 40 404 oder der DE 197 55 324 A1 hervor.

Ein Flottenmanagementsystem, das Daten von mobilen Arbeitsmaschinen und deren Position auf einer Internet-Website anzeigt, ist in der EP 1 314 101 A1 beschrieben. Die EP 1 550 096 offenbart ein System, das die Qualität der Asphaltierung oder die Qualität des Asphalts misst. Ein System zur Bestimmung der Verdichtung eines Asphalts wird in der EP 0 698 152 B2 angesprochen. Dieses Dokument offenbart Vorgaben für eine Geschwindigkeit beziehungsweise eines Vorsprungs eines Straßenfertigers vor den nachfolgenden Walzen oder anderen Verdichtungsmaschinen.

Um den Betriebsablauf auf einer Baustelle optimieren zu können, wäre es vorteilhaft, die Positionen und/oder Bewegungen von Baustellenfahrzeugen erfassen zu können. Im Stand der Technik wird bereits angeregt, jedem Baustellenfahrzeug zu diesem Zweck eine eigene Identifizierung zuzuordnen, damit die einzelnen Baustellenfahrzeuge individuell erfasst und überwacht werden können, z.B. zur Überwachung des Pendelverkehrs, An- und Abfahrzeiten.

Aufgabe der vorliegenden Erfindung ist es, Mittel zu Verfügung zu stellen, um die Identifizierung von Fahrzeugen auf einer Baustelle weiter zu verbessern.

Diese Aufgabe wird gelöst durch ein tragbares Lesegerät mit den Merkmalen des Anspruchs 1, bzw. durch eine Kennzeichnung zur Anbringung an einem Baustellenfahrzeug mit den Merkmalen des Anspruchs 8. Vorteilhafte Weiterbildungen der Erfindung sind in den Unteransprüchen angegeben.

Das erfindungsgemäße Lesegerät zeichnet sich dadurch aus, dass es tragbar ist. "Tragbar" heißt in diesem Zusammenhang, dass das Lesegerät mobil ist bzw. an beliebigen Orten aufgestellt werden kann. Beispielsweise kann das Lesegerät an einem Asphaltmischwerk, entlang eines Transportwegs oder an beliebigen Stellen auf einer Baustelle aufgestellt werden. Vorteilhaft daran ist, dass der Aufstellungsort des Lesegeräts an den Fortschritt der Baustelle angepasst werden kann, insbesondere bei sich zeitlich verändernden Baustellen wie im Straßen- oder Gleisbau. Wenn sich - beispielsweise beim Bau oder der Erneuerung eines Abschnitts einer Autobahn - die Zuwege oder Einfahrten zur Baustelle ändern, kann das tragbare Lesegerät von einer Einfahrt zu einer anderen Einfahrt versetzt werden.

Das erfindungsgemäße, tragbare Lesegerät umfasst ein Standortbestimmungsmodul. Mit diesem Standortbestimmungsmodul sind die Koordinaten des aktuellen Standorts des Lesegeräts erfassbar und/oder speicherbar. Diese Standortbestimmung ist vorteilhaft, da das Lesegerät tragbar ist und daher mobil an unterschiedlichen Orten eingesetzt werden kann. Des Weiteren umfasst das Lesegerät einen Lesekopf zum Erfassen der identifizierenden Kennzeichnung eines Baustellenfahrzeugs. Dieser Lesekopf erkennt und identifiziert ein das Lesegerät passierendes Baustellenfahrzeug anhand von dessen Kennzeichnung. Darüber hinaus umfasst das Lesegerät ein Kommunikationsmodul, das zur drahtgebundenen oder drahtlosen Übermittlung von Daten und Signalen an einen externen Empfänger konfiguriert ist. Mittels dieses Kommunikationsmoduls kann der Zeitpunkt der Erfassung einer Kennzeichnung eines bestimmten Baustellenfahrzeugs zusammen mit dieser Kennzeichnung oder einer der Kennzeichnung zugeordneten Identifizierung des Baustellenfahrzeugs an den externen Empfänger übermittelt werden. Auf diese Weise wird der externe Empfänger darüber informiert, wann das betreffende Baustellenfahrzeug an dem tragbaren Lesegerät vorbeigefahren ist.

Unter anderem zum Speichern der Standortkoordinaten sowie zum Auswerten der erfassten Kennzeichnung eines Baustellenfahrzeugs kann das erfindungsgemäße Lesegerät eine Steuer- und Auswerteeinheit aufweisen, die beispielsweise in Form eines (Mikro-) Computers realisiert ist, der geeignet programmiert ist. Günstig ist es auch, wenn das Lesegerät eine Auslöseeinrichtung aufweist, die den Lesekopf genau zu dem Zeitpunkt aktiviert, in dem ein Baustellenfahrzeug an dem tragbaren Lesegerät vorbeifährt. Dies ermöglicht es, einen Dauerbetrieb des Lesekopfs zu vermeiden und auf diese Weise Energie einzusparen. Bei der Auslöseeinrichtung kann es sich beispielsweise um eine Lichtschranke oder um eine induktive Schleife handeln, deren Betriebszustand durch ein vorbeifahrendes Baustellenfahrzeug verändert wird, woraufhin der Lesekopf zum Erfassen der Kennzeichnung des Baustellenfahrzeugs aktiviert wird.

Zweckmäßig ist es, wenn mehrere oder sogar sämtliche Komponenten des Lesegeräts in einem tragbaren Gehäuse aufgenommen sind. Dieses Gehäuse sichert die Komponenten des Lesegeräts gegen widrige Umwelteinflüsse wie Schmutz oder Feuchtigkeit auf der Baustelle, und erleichtert das Versetzen des tragbaren Lesegeräts an eine andere Stelle. Griffe an dem tragbaren Gehäuse können das Tragen des Lesegeräts erleichtern.

In einer bevorzugten Ausführungsform der Erfindung ist der Lesekopf dazu eingerichtet, die Kennzeichnung des Baustellenfahrzeugs mittels elektromagnetischer Strahlung zu erfassen, insbesondere mittels elektromagnetischer Strahlung im sichtbaren oder im infraroten Spektralbereich. Diese Art der Erfassung der Kennzeichnung ermöglicht eine drahtlose Erfassung, sodass kein direkter Kontakt zwischen dem Baustellenfahrzeug und dem Lesegerät erforderlich ist. Das Baustellenfahrzeug kann mit seiner Kennzeichnung auch dann erfasst werden, wenn es in einem bestimmten Abstand am Lesegerät vorbeifährt. Dieser Abstand oder ein Abstandsbereich, in dem das Erfassen der Kennzeichnung möglich ist, können einstellbar sein. Das Erfassen der Kennzeichnung mittels Infrarotstrahlung hat zudem den Vorteil, das der Fahrer des Baustellenfahrzeugs diese Strahlung nicht sieht und daher von ihr nicht abgelenkt werden kann.

Alternativ könnte es sich bei der Kennzeichnung auch um ein RFID-Tag handeln, der mittels elektromagnetischer Hochfrequenzstrahlung ausgelesen wird. Übliche Bereiche der Hochfrequenzstrahlung, die für das Auslesen von RFID-Tags verwendet werden, sind 30 bis 500 kHz, 3 bis 30 MHz, 433 MHz, 850 bis 950 MHz, 2,4 bis 5,8 GHz oder noch höhere Frequenzen.

Der Lesekopf des tragbaren Lesegeräts kann eine Kamera aufweisen, beispielsweise eine CCD-Kamera. Diese Kamera kann ein Bild aufnehmen, das die Kennzeichnung des Baustellenfahrzeugs enthält. Wenn im tragbaren Lesegerät eine geeignete Auswerteeinheit vorgesehen ist, kann diese Auswerteeinheit aus dem aufgenommenen Bild mittels einer geeigneten Bilderkennungssoftware die Kennzeichnung erkennen und die der jeweiligen Kennzeichnung zugeordnete Identifizierung des Baustellenfahrzeugs ermitteln. Bei dieser Identifizierung kann es sich um eine Identifizierungsnummer oder um einen Identifizierungscode handeln.

Zur Stromversorgung der Komponenten des Lesegeräts weist das Lesegerät vorzugsweise eine Batterie auf (sodass es autark einsetzbar ist), oder es verfügt über einen Stromversorgungsanschluss, um an eine externe Stromversorgung angeschlossen werden zu können. Denkbar ist es auch, dass sowohl eine Batterie, als auch ein Stromversorgungsanschluss vorgesehen sind, um die Flexibilität des Einsatzes des Lesegeräts zu vergrößern.

Das Standortbestimmungsmodul des erfindungsgemäßen Lesegeräts umfasst vorzugsweise eine Eingabevorrichtung zur Eingabe von Standortkoordinaten, beispielsweise eine mit der Steuer- und Auswerteeinheit des Lesegeräts verbundene Tastatur. In dieser Variante können die aktuellen Standortkoordinaten des Lesegeräts mit einem externen GPS-Gerät oder einem zur Standortbestimmung geeigneten GSM-Mobiltelefon bestimmt und anschließend mittels der Eingabevorrichtung am Lesegerät eingegeben werden. Alternativ oder zusätzlich ist es möglich, dass das Lesegerät einen GNSS-Empfänger zum automatischen Erfassen der aktuellen Standortkoordinaten aufweist (GNSS: Globales Navigationssatellitensystem). Ein solcher GNSS-Empfänger, beispielsweise ein GPS-Gerät, ermöglicht die exakte Bestimmung der geographischen Länge und Breite des aktuellen Standorts des Lesegeräts.

Die Einsatzmöglichkeiten des tragbaren Lesegeräts können noch erweitert werden, indem das Lesegerät wenigstens eine Schnittstelle zur Ankopplung einer Messeinrichtung (beispielsweise einer Waage für Baustellenfahrzeuge), einer Datenübertragungseinrichtung und/oder einer externen Eingabeeinrichtung aufweist. Bei dieser Schnittstelle kann es sich beispielsweise um einen USB-Port, eine Infrarotschnittstelle oder eine Bluetooth-Schnittstelle handeln. Das Gerät kann auch um einen Drucker oder um eine Druckerschnittstelle erweitert werden. Über einen integrierten oder angeschlossenen Drucker können Informationen an den LKW-Fahrer ausgegeben werden, z. B. (aber nicht beschränkt auf): Ankunftszeiten, Taktzeiten, Maximalgeschwindigkeiten, Fahrziel u.s.w. Derartige Informationen können auch über ein integriertes GSM-Telefon als SMS zu einem Mobiltelefon des LKW-Fahrers oder zu anderen am Prozess Beteiligten gesendet werden.

Die Erfindung bezieht sich auch auf eine Kennzeichnung zur Anbringung an einem Baustellenfahrzeug. Vorzugsweise ist diese Kennzeichnung zur Erfassung durch ein Lesegerät der vorstehend beschriebenen Art geeignet. Diese Kennzeichnung umfasst einen am Baustellenfahrzeug anbringbaren Träger sowie einen auf dem Träger vorgesehenen Aufdruck. Im Gegensatz zu elektronisch oder induktiv erfassbaren Kennzeichnungen wie beispielsweise RFID-Tags hat die erfindungsgemäße Kennzeichnung den Vorteil, vergleichsweise simpel zu sein und sehr kostengünstig herstellbar zu sein, beispielsweise mit einem handelsüblichen Drucker. Dadurch ist es auch möglich, die Kennzeichnungen erst auf der Baustelle auszudrucken und am Baustellenfahrzeug anzubringen, sofern bestimmte Baustellenfahrzeuge beim Eintreffen auf der Baustelle noch keine Kennzeichnung haben sollten, wenn das Baustellenfahrzeug die Kennzeichnung verloren hat oder wenn sich die Identifizierung bestimmter Baustellenfahrzeuge auf der Baustelle ändert und daher neue Kennzeichnungen verteilt werden müssen.

Das Herstellen der erfindungsgemäßen Kennzeichnung mit einem handelsüblichen Drucker wird weiter begünstigt, wenn der Träger der Kennzeichnung aus Papier oder Karton besteht.

Zweckmäßig ist es, wenn der Aufdruck auf dem Träger eine verschlüsselte Identifizierung des Baustellenfahrzeugs aufweist. Diese Verschlüsselung der Identifizierung schützt vor Manipulationen und erhöht so die Zuverlässigkeit bei der Erfassung der Kennzeichnung.

Vorzugsweise umfasst der Aufdruck einen ein- oder zweidimensionalen Barcode, der die Identifizierung des Baustellenfahrzeugs repräsentiert und weitere Daten enthalten kann, beispielsweise betreffend den Typ des jeweiligen Baustellenfahrzeugs.

Zum Schutz der Kennzeichnung vor den widrigen Umwelteinflüssen auf der Baustelle kann ein Schmutz- und/oder Feuchtigkeitsschutz für die Kennzeichnung vorgesehen sein, beispielsweise eine transparente Folie oder Fülle, die die Kennzeichnung schützt, ohne ihre Erfassung beispielsweise durch ein erfindungsgemäßes Lesegerät zu beeinträchtigen.

Im Folgenden wird ein vorteilhaftes Ausführungsbeispiel der Erfindung anhand einer Zeichnung näher erläutert. Im Einzelnen zeigen:
- Figur 1: einen Ausschnitt eines Baustellenfahrzeugs mit einer erfindungsgemäßen Kennzeichnung und
- Figur 2: ein erfindungsgemäßes Lesegerät.

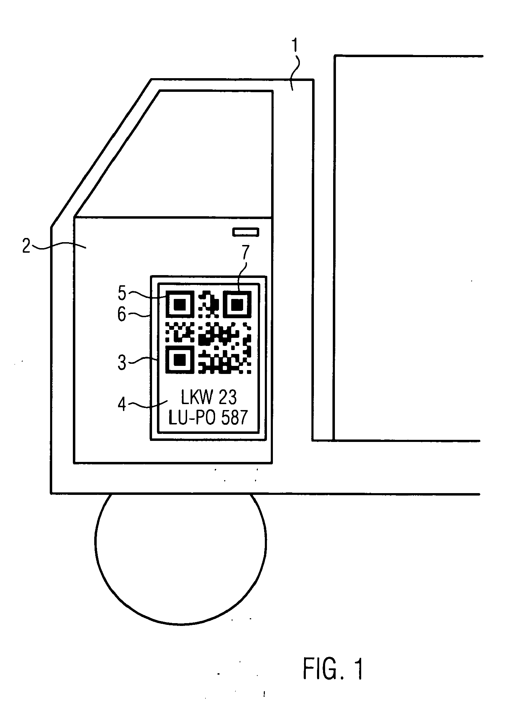

Figur 1 zeigt schematisch einen Ausschnitt eines Baustellenfahrzeugs 1, im vorliegenden Fall eines LKWs. An der Tür 2 der Fahrerkabine des Baustellenfahrzeugs 1 ist eine erfindungsgemäße Kennzeichnung 3 angebracht. Diese Kennzeichnung 3 dient zur Identifizierung des Baustellenfahrzeugs 1 bzw. zum Repräsentieren einer dem betreffenden Baustellenfahrzeug 1 individuell zugeordneten Identifizierung. Die Kennzeichnung 3 weist einen Träger 4 aus Papier oder Karton auf, der mit einem Aufdruck 5 versehen ist. Der Träger 4 befindet sich in einer die Kennzeichnung 3 vor Feuchtigkeit und Schmutz schützenden Schutzhülle aus transparentem Kunststoff, die an der Tür 2 des Baustellenfahrzeugs 1 befestigt ist, beispielsweise durch Aufkleben.

Der Aufdruck 5 der Kennzeichnung 3 weist untereinander drei verschiedene Felder auf. Das mittlere Feld benennt die dem Baustellenfahrzeug 1 individuell zugeordnete Identifizierung, im vorliegenden Fall "LKW 23". Das darüberliegende Feld des Aufdrucks 5 enthält einen zweidimensionalen Barcode 7, der die Identifizierung "LKW 23" in verschlüsselter Form repräsentiert und mittels eines Lesegeräts auslesbar ist. Unterhalb der Identifizierung "LKW 23" führt der Aufdruck 5 das polizeiliche Kennzeichen des Baustellenfahrzeugs 1 auf, im vorliegenden Fall "LU-PO 587".

Die mittels sichtbarer elektromagnetischer Strahlung auslesbare Kennzeichnung 3 ist mit einem handelsüblichen Drucker auf der Baustelle herstellbar, indem ein Träger 4 aus Papier oder Karton mit einem Aufdruck 5 versehen wird.

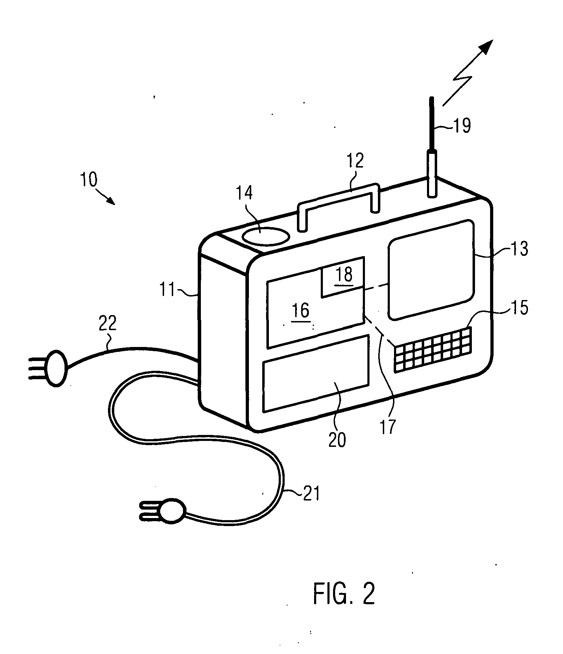

Figur 2 zeigt ein erfindungsgemäßes, tragbares Lesegerät 10, mit dem beispielsweise eine in Figur 1 gezeigte Kennzeichnung 3 eines Baustellenfahrzeugs 1 erfassbar ist. Das Lesegerät 10 umfasst ein tragbares Gehäuse 11 in Form eines Koffers. Dieses Gehäuse 11 enthält die Komponenten des Lesegeräts 10 und verfügt über einen Griff 12, mittels dessen das Lesegerät 10 tragbar ist. Das Lesegerät verfügt über einen Lesekopf 13, beispielsweise einen RFID-Leser oder eine CCD-Kamera. Mittels des Lesekopfs 13 ist die Kennzeichnung 3 von Baustellenfahrzeugen 1 erfassbar. Zu diesem Zweck wird der Lesekopf 13 vorzugsweise so ausgerichtet, dass er möglichst gut die Kennzeichnung 3 vorbeifahrender Baustellenfahrzeuge 1 erfassen kann.

Ein GNSS-Empfänger 14, beispielsweise ein GPS-Empfänger, dient zum automatischen Erfassen der aktuellen Standortkoordinaten des Lesegeräts 10. Standortkoordinaten können ferner extern gemessen und mittels einer Eingabevorrichtung 15, beispielsweise einer Tastatur, am Lesegerät 10 eingegeben werden.

Das Lesegerät 10 verfügt ferner über eine Steuer- und Auswerteeinheit 16, beispielsweise in Form eines Kleincomputers. Der Lesekopf 13, der GNSS-Empfänger 14 und die Eingabevorrichtung 15 sind über Steuer- und Datenleitungen 17 mit der Steuer- und Auswerteeinheit 16 verbunden. In der Steuer- und Auswerteeinheit 16 werden die Standortkoordinaten des Lesegeräts 10 gespeichert und aus der mittels des Lesekopfs 13 erfassten Kennzeichnung 3 die zugeordnete Identifizierung des Baustellenfahrzeugs 1 ermittelt. Ein Kommunikationsmodul 18 kann als Teil der Steuer- und Auswerteeinheit 16 realisiert sein. Dieses Kommunikationsmodul 18 ist dazu konfiguriert, mittels einer Antenne 19 (beispielsweise über GSM-Mobilfunk) den Zeitpunkt der Erfassung eines bestimmten Baustellenfahrzeugs 1 und die für dieses Baustellenfahrzeug 1 erfasste Kennzeichnung 3 oder die zugeordnete Identifizierung an einen externen Empfänger zu übermitteln.

Eine Batterie bzw. ein Akku 20 sichert die Stromversorgung der Komponenten des Lesegeräts 10. Zusätzlich ist ein Stromversorgungsanschluss 21 mit einem Stromkabel und einem Stecker vorgesehen, damit der Akku 20 aufgeladen werden kann und nur dann beansprucht werden muss, wenn keine externe Stromversorgung zur Verfügung steht.

Schließlich verfügt das Lesegerät 10 noch über eine Schnittstelle 22, mit der eine externe Messeinrichtung angekoppelt werden kann, beispielsweise eine Waage zum Wiegen eines vorbeifahrenden Baustellenfahrzeugs 1.

Ausgehend von den dargestellten Ausführungsbeispielen können die erfindungsgemäße Kennzeichnung 3 und das erfindungsgemäße Lesegerät 10 in vielfacher Hinsicht abgewandelt werden. Bereits erläutert wurde, dass das Lesegerät 10 eine Auslöseeinrichtung aufweisen kann, beispielsweise eine Lichtschranke, die den Lesekopf 13 genau zu den Zeitpunkten aktiviert, wenn ein Baustellenfahrzeug 1 das Lesegerät 10 passiert. Zum Ausrichten, Transportieren und zur Justage des Lesegeräts 10 kann das Gehäuse 11 Rollen aufweisen und/oder ein Stativ. Dadurch kann das Lesegerät 10 so ausgerichtet werden, dass es die Kennzeichnung 3 vorbeifahrender Baustellenfahrzeuge 1 besonders gut erfasst.

Vorzugsweise ist der externe Empfänger, der die Signale vom Lesegerät 10 empfängt, Teil eines größeren Systems zur Steuerung des Betriebsablaufs einer Baustelle und/oder einer Zulieferkette zum Beliefern der Baustelle, beispielsweise mit Einbaumaterial für einen Straßenfertiger. Das tragbare Lesegerät 10 kann dann beispielsweise an Baustelleneinfahrten oder an einem Mischwerk aufgestellt werden. Es ermöglicht das Erfassen des Zeitpunktes, zu dem bestimmte Baustellenfahrzeuge 1 das Lesegerät 10 passieren. Dadurch erhält das System die Information darüber, wo sich die einzelnen Baufahrzeuge 1 befinden und wie lange sie für bestimmte Strecken benötigen. Diese Informationen können dazu benutzt werden, den Betriebsablauf der Baustelle zu optimieren, beispielsweise indem mehr oder weniger Material angefordert wird, oder indem der Einbau eines Straßenbelages mit gleichmäßigerer Geschwindigkeit vonstatten gehen kann. Außerdem kann das System auf diese Weise erkennen, ob sich an bestimmten Stellen zu viele Lieferfahrzeuge stauen, sodass weitere Lieferfahrzeuge 1 zu anderen Punkten auf der Baustelle dirigiert werden können.

## Patentansprüche

1. Tragbares Lesegerät (10) zum Erfassen einer identifizierenden Kennzeichnung (3) eines Baustellenfahrzeugs (1), wobei das Lesegerät (10) einen Lesekopf (13) zum Erfassen der Kennzeichnung (3), ein Standortsbestimmungsmodul (14) und ein Kommunikationsmodul (18) aufweist.

2. Lesegerät nach Anspruch 1, **dadurch gekennzeichnet, dass** sämtliche Komponenten des Lesegeräts (10) in einem tragbaren Gehäuse (11) aufgenommen sind.

3. Lesegerät nach einem der vorangehenden Ansprüche, **dadurch gekennzeichnet, dass** der Lesekopf (13) dazu eingerichtet ist, die Kennzeichnung (3) mittels elektromagnetischer Strahlung zu erfassen, insbesondere mittels elektromagnetischer Strahlung im sichtbaren oder im infraroten Spektralbereich oder mittels Hochfrequenzstrahlung.

4. Lesegerät nach einem der vorangehenden Ansprüche, **dadurch gekennzeichnet, dass** der Lesekopf (13) eine Kamera () aufweist, insbesondere eine CCD-Kamera.

5. Lesegerät nach einem der vorangehenden Ansprüche, **dadurch gekennzeichnet, dass** das Lesegerät (10) eine Batterie (20) und/oder einen Stromversorgungsanschluss (21) aufweist.

6. Lesegerät nach einem der vorangehenden Ansprüche, **dadurch gekennzeichnet, dass** das Standortsbestimmungsmodul (14) eine Eingabevorrichtung (15) zur Eingabe von Standortkoordinaten und/oder einen GNSS-Empfänger (14) zum automatischen Erfassen von Standortkoordinaten aufweist.

7. Lesegerät nach einem der vorangehenden Ansprüche, **dadurch gekennzeichnet, dass** das Lesegerät (10) wenigstens eine Schnittstelle (22) zur Ankopplung einer Messeinrichtung, einer Datenübertragungseinrichtung oder einer Eingabeeinrichtung aufweist.

8. Kennzeichnung (3) zur Anbringung an einem Baustellenfahrzeug (1), insbesondere zur Erfassung durch ein Lesegerät (10) nach einem der vorangehenden Ansprüche, wobei die Kennzeichnung (3) einen am Baustellenfahrzeug (1) anbringbaren Träger (4) und einen auf dem Träger (4) vorgesehenen Aufdruck (5) umfasst.

9. Kennzeichnung nach Anspruch 8, **dadurch gekennzeichnet, dass** der Träger (4) aus Papier oder Karton besteht.

10. Kennzeichnung nach einem der Anspruche 8 oder 9, **dadurch gekennzeichnet, dass** der Aufdruck (5) eine verschlüsselte Identifizierung des Baustellenfahrzeugs (1) aufweist.

11. Kennzeichnung nach einem der Anspruche 8 bis 10, **dadurch gekennzeichnet, dass** der Aufdruck (5) einen ein- oder zweidimensionalen Barcode (7) umfasst.

12. Kennzeichnung nach einem der Anspruche 8 bis 11, **dadurch gekennzeichnet, dass** ein Schmutz- und/oder Feuchtigkeitsschutz (6) vorgesehen ist.
